# EUROPEAN PATENT APPLICATION

(11) **EP 3 590 905 A1**
(43) Date of publication of application: **08.01.2020**
(21) Application number: 18181539.0
(22) Date of filing: 03.07.2018
(51) Int. Cl.: C04B 28/04, C04B 28/24, C04B 33/132, C04B 33/135, C04B 35/18, C04B 28/02, C04B 35/626, C04B 35/632, A62D 1/02, C01B 13/14, A23P 30/40

(54) **PARTICLE-STABILIZED FOAMS USING SUSTAINABLE MATERIALS**

(71) Applicant: ETH Zurich, 8092 Zurich (CH)
(72) Inventor: STUDART, André R., 8044 Zürich (CH); RÜHS, Patrick, 8050 Zürich (CH); TERVOORT, Elena, 8006 Zurich (CH); FREITAG, Jonas, 8213 Neukirch (CH); TRAN, Ka Lie, 5430 Wettingen (CH); CARPENTER, Julia, 8052 Zurich (CH); MINAS, Clara, 8050 Zurich (CH); JEOFFROY, Etienne, 8049 Zurich (CH)

(57) **Abstract**

Described is a method of preparing foams, wherein a suspension comprising an aqueous liquid, particles and at least one surfactant is provided, wherein the at least one surfactant at least partially hydrophobizes a surface of the particles, and wherein the suspension comprising the particles having the at least partially hydrophobized surface is foamed. The at least one surfactant is selected from surfactants having a backbone chain comprising at least nine carbon atoms, the at least one surfactant preferably being an amphiphilic molecule consisting of a tail coupled to a head group, wherein the tail comprises the backbone chain comprising at least nine carbon atoms.

## Description

### TECHNICAL FIELD

The present invention relates to the field of foam formation.

### PRIOR ART

By 2030, modern thermal insulation materials are expected to reduce the total energy costs by 20%. However, today's modern solutions must also adapt to continuously-changing regulations such as the use of non-flammable, non-toxic and environmental-friendly materials. Currently, many of the major industrial actors do not meet these requirements. Polymeric solutions such as Expanded Polystyrene (EPS) or Polyurethane (PU) are most frequently used because of their low thermal conductivity in spite of being made through toxic processes and being highly flammable. Other solutions such as glass wool or mineral wool are not flammable but are energy intensive during manufacturing and they may lead to human health issues. Recent solutions such as porous cement or aerogels tend to reach low thermal conductivity while being flame resistant and non-toxic during their manufacturing. However, the former option is a high carbon dioxide emitter while aerogels still remain very expensive. As a result, there is a gap in the building insulation market that is not filled by currently available solutions.

Moreover, a rather simple and relatively inexpensive production method for lighter density products is achieved by foamed concretes, which typically consist of a slurry of cement and sand and water, and which is then further mixed with an aerated foam. The foam is created using a foaming agent.

In this context US2017158568 A1 and WO 2017/093796 A1 in each case disclose a method for producing an ultra-light mineral foam, wherein a slurry of Portland cement and an aqueous foam comprising water and a foaming agent are mixed. Thereby, a slurry of foamed cement is obtained, which is then subjected to casting.

Moreover, EP 1 960 097 B1 discloses the manufacturing of porous articles such as cement based wet foams, wherein said wet foams are prepared from a foamed suspension comprising colloidal particles. The surface of said particles has been modified by short-chain surfactants. These foams display a high stability but also require a high amount of surfactants. Furthermore, upon further processing of these foams such as sintering, rather high carbon dioxide emissions are created.

### SUMMARY OF THE INVENTION

It is therefore an object of the present invention to overcome the drawbacks of the prior art. In particular, it is an object to provide a method of preparing foams that are improved especially in regards to environmental aspects.

This object is achieved with the method according to claim 1. In particular, a method of preparing foams is provided which comprises the steps of:
- providing a suspension comprising an aqueous liquid, preferably water, particles, and at least one surfactant, wherein the at least one surfactant at least partially hydrophobizes a surface of the particles; and
- foaming the suspension comprising the particles having the at least partially hydrophobized surface. The at least one surfactant is selected from surfactants having a backbone chain comprising at least nine carbon atoms.

A critical issue is the stabilization of the air bubbles incorporated in the foamed suspension until the foam is set. Traditionally, surfactants such as lipids and proteins are used to slow down the coalescence of bubbles by adsorbing at the gas-liquid interface. However, these surfactant-stabilized methods prevent foam destabilization only for a few hours due to the low adsorption energy of the surfactants at the interface. Here, the stability of the foams results from the stabilization of the particles having the at least partially hydrophobized surface, i.e. stabilization due to the adsorption of the surface-modified particles on the surface of the bubbles and stabilization due to the formation of a percolating network of particles throughout the aqueous liquid. Contrary to traditional surfactants, these particles are kinetically trapped at the surface of the air bubbles, thereby increasing the stability from a few days to months. In addition, the use of surfactants having a backbone chain comprising at least nine carbon atoms, herein called long-chain surfactants, not only yields foam stabilization through particles present at the gas-liquid interface, but the stability of the generated wet foam is also ensured by the formation of the strong percolating network formed around the air bubbles generated upon the foaming of the suspension. The percolating network can be seen as a gelation or strengthening of the gas-liquid interface and of the surrounding aqueous medium, which in the present case increases the stability of the foam. The expression "percolating network" is well-known in the state of the art and can be referred to as a "percolating network of modified particles that form a gel with elastic modulus higher than the viscous modulus". Hence, the gas-liquid interface is stabilized by a thus created composite-like material comprising the surface-modified particles that are interconnected with the network of modified particles. Generally, the percolation network is based on any kind of surface active particles and active molecules. Active particles correspond to particles whose surface can be modified by the adsorption of molecules such as surfactants or which can adsorb at the gas-liquid interface without any surface modification. Active molecules are molecules such as surfactants that can adsorb at the surface of particles or at the gas-liquid interface.

Moreover, the amount of surfactant needed in order to stabilize the particles and the foams, respectively, is significantly smaller if long-chain surfactants are used instead of short-chain surfactants, i.e. surfactants having a backbone chain comprising less than nine carbon atoms. In fact, it was found that about four times or even smaller concentrations of long-chain surfactants were needed in order to obtain a level of porosity comparable to the porosity obtained by using short-chain surfactants. The reduced amount of long-chain surfactants needed for obtaining a stable foam is due to the fact that long-chain surfactants are more effective in modifying the surface of the particles. In other words, one needs less surfactant in order to obtain the same degree of particle modification, i.e. particle hydrophobization, compared to a short-chain surfactant. Moreover, from a certain molecular weight of the surfactant, typically around 300g/mol, the long-chain surfactant can also participate in building up the network by binding a few particles together, which additionally increases the stability of the foam. That is, additional stability is achieved by particles that interact with each other via the long-chain surfactants adsorbed on their surface.

In the present context the longest series of covalently bonded atoms that together create a continuous chain of the molecular structure of the surfactant is referred to as the backbone chain. Hence, the backbone chain of a surfactant having a backbone chain comprising at least nine carbon atoms can comprise at least nine carbon atoms being covalently connected with each other or at least nine carbon atoms some of which being covalently connected to other atoms. The surfactants correspond to amphiphilic compounds as they are known by the person skilled in the art, meaning that they comprise hydrophobic groups and hydrophilic groups. By adding an amphiphilic surfactant to the suspension comprising the particles, depending on the type of surfactant, an initially hydrophobic or lyophobic particle surface can be rendered more hydrophilic or lyophilic, and an initially hydrophilic or lyophilic particle surface can be rendered more hydrophobic or lyophobic, respectively. The meaning of the terms "hydrophobic", "lyophobic", "hydrophilic" and "lyophilic" as used herein corresponds to the generally known meaning of these terms. For example, hydrophilic/lyophilic means readily dispersed by water/a solvent or readily absorbing water/a solvent, whereas hydrophobic/lyophobic means the opposite. Due to the fact that the surfactants have a backbone chain of at least nine carbon atoms, the particles will be hydrophobized upon the interaction with the surfactant.

The amphiphilic surfactant can also be seen as comprising a tail and a head-group, wherein it is preferred that the tail has a backbone chain comprising at least nine carbon atoms. That is, the at least one surfactant used herein corresponds to a molecule with a preferably polar head-group and at least one hydrophobic chain, the said backbone chain, wherein the polar head-group interacts with the particles.

The strength of the percolating network at the gas-liquid interface and/or formed throughout the continuous phase can be adjusted by means of the type of particles that will be at least partially surface-hydrophobized as well as by means of the type of long-chain surfactants that interconnect different particles and adsorb at the gas-liquid interface. It has been observed as a general tendency that the longer the chain of the surfactant the more probable the formation of a gel-like structure.

Additives such as polysaccharides or proteins or other preferably organic molecules can be added to the suspension, the additives then participate in the network stabilization. Namely, it has been observed that the addition of such compounds to a suspension comprising already surface-modified particles, i.e. hydrophobized particles, results in improved stability and printability of the foam. This is attributed to the formation of a gel-like structure. Conceivable additives in this context are cellulose, xanthan or fumed silica.

At this point it should be noted that it is possible to prepare a first suspension comprising an aqueous liquid, preferably water, and at least one surfactant, and then adding the particles to said first suspension, wherein the at least one surfactant at least partially hydrophobizes the surface of the particles, whereby a second suspension is prepared, and which second suspension is then foamed. Likewise, it is possible to prepare a first suspension comprising an aqueous liquid and particles, and then adding at least one surfactant to the first suspension, whereby a second suspension is formed, and which second suspension is then foamed. Moreover, it should be noted that it is also conceivable to prepare one suspension comprising an aqueous liquid and particles and to prepare another suspension comprising an aqueous liquid and surfactants, and to then mix these two suspensions, wherein said mix corresponds to the suspension subjected to foaming in the context of the present application. All statements made herein with respect to one of these preparation manners apply mutatis mutandis to the others of these preparation manners.

The aqueous liquid used to prepare the suspension or a first and a second suspension, respectively, is water-based and can be water only or a mixture, such as e.g. a mixture of water and alcohol. The water can be untreated water, potable water, purified water or distilled water. Conceivable alcohols are aliphatic alcohols, preferably ethanol. For example, it is conceivable to use a mixture comprising about 30 vol.-% to 40 vol.-% of ethanol and about 60 vol.-% to 70 vol.-% of water per total volume of the mixture.

The at least one surfactant is preferably selected from the group consisting of polyelectrolytes, proteins, polysaccharides, glycerols, glycerides such as monoglycerides, diglycerides and triglycerides, fatty acids such as oleic acid or linoleic acid, ammonium compounds, alkyl compounds, or combinations thereof. That is, the surfactant used to at least partially hydrophobize the surface of the particles in the suspension can be a polyelectrolyte and/or a protein and/or a polysaccharide and/or a glycerol and/or a glyceride and/or a fatty acid and/or an ammonium compound and/or an alkyl compound, which in each case comprises a backbone chain comprising at least nine carbon atoms.

In the case that the at least one surfactant is a polysaccharide, a conceivable polysaccharide compound is chitosan. A conceivable triglyceride is Miglyol® 812 and Imwitor® 988 is an example of a conceivable monoglyceride and diglyceride, respectively. In the case that the at least one surfactant is a polyelectrolyte, conceivable polyelectrolytes are polyacrylic acid, polystyrene sulfonate and polyallylamine hydrochloride, for example.

The polyelectrolytes in the suspension can be anionic or cationic or zwitterionic, and/or the proteins in the suspension can be anionic or cationic or non-ionic or zwitterionic, and/or the polysaccharides in the suspension can be anionic or cationic or non-ionic or zwitterionic.

The polyelectrolytes and/or the proteins and/or the polysaccharides and/or the glycerols and/or the glycerides and/or the fatty acids and/or the ammonium compounds and/or the alkyl compounds preferably have at least one group selected from bromides, amines, phosphates, phosphonates, sulfates, amides, carboxylic acids, pyrrolidines, betaines or gallates or corresponding salts thereof. In this case, the group selected from bromides, amines, phosphates, phosphonates, sulfates, amides, carboxylic acids, pyrrolidines, betaines or gallates or corresponding salts thereof corresponds to the above-mentioned head of the amphiphilic surfactant.

A conceivable gallate-compound is lauryl gallate, a conceivable betaine-compound is cocamidopropyl betaine, and a conceivable amine-compound is a primary, a secondary or a tertiary amine compound, wherein the one or more substituents are preferably alkyl or aryl groups, respectively.

The polyelectrolytes correspond to macromolecules bearing anionic or cationic or zwitterionic dissociable groups as they are known in the state of the art. These groups dissociate in aqueous solutions such as water, making the macromolecules charged. The polyelectrolytes can be classified as either weak or strong types, wherein a strong polyelectrolyte is one that carries a charge independent of the pH-value of the aqueous solution, whereas a weak polyelectrolyte is one whose degree of dissociation depends from the pH-value of the aqueous solution. Here, it is conceivable to use both types of polyelectrolytes as surfactants.

The at least one surfactant is preferably a glycerol monostearate-based compound, particularly preferably Cremodan™ SE 019 available from Danisco™ ingredients, cetrimonium bromide (CTAB), tetradecyltrimethylammonium bromide (TTAB), or nonylamine (CH₃(CH₂)₇CH₂NH₂).

In case of glycerol monostearate, also known as 2, 3-Dihydroxypropyl octadecanoate and being the glycerol ester of stearic acid, said glycerol ester corresponds to the above-mentioned head of the amphiphilic surfactant and the hydrocarbon-chain attached to said glycerol ester corresponds to the tail of the amphiphilic surfactant. Likewise, the case of CTAB and TTAB, the ammonium bromide corresponds to the head of the surfactant and the hydrocarbon chain corresponds to the tail of the surfactant. Moreover, in case of nonylamine, the amine group corresponds to the head of the surfactant and the hydrocarbon chain corresponds to the tail of the surfactant.

It should be noted that these compounds, i.e. the long-chain surfactants in general, can be provided individually or in the form of a mixture of various surfactants and/or with other compounds. For example, in the case of a monostearate-based compound in the form of Cremodan™ SE 019 a mixture comprising the monostearate-based compound but also locust bean gum, sodium alginate, guar gum and carrageenan is added. Likewise, only one type of surfactant or two or more different types of surfactants can be used simultaneously or subsequently in order to at least partially hydrophobize the particle surfaces of the suspension. For example, a surface hydrophobization could be accomplished by adding cetrimonium bromide or nonylamine only to the suspension. However, it is likewise conceivable to add a mixture of cetrimonium bromide and nonylamine and tetradecyltrimethylammonium bromide to the suspension, for example.

An advantage associated with the use of a monostearate-compound such as Cremodan™ as a surfactant is its non-toxicity. In fact, the use of such a non-toxic surfactant allows the manufacturing of environmental-friendly materials.

Likewise, it is conceivable to use one or more proteins or a mixture of proteins as surfactants, wherein non-toxic proteins such as gelatin, bovine serum albumin or casein are preferred.

The at least one surfactant can be present in amounts of about 0.001 % by weight up to about 5 % by weight per total weight of the particles, preferably of about 0.01 % by weight up to about 2 % by weight per total weight of the particles. Hence, regarding the particularly preferred surfactants above it is to be noted that preferred amounts are about 0.001 % by weight up to about 5 % by weight of nonylamine per total weight of the particles, about 0.001 % by weight up to about 5 % by weight of CTAB per total weight of the particles, about 0.001 % by weight up to about 5 % by weight of TTAB per total weight of the particles, and about 0.001 % by weight up to about 5 % by weight of Cremodan™ per total weight of the particles, respectively. The particularly preferred amounts depend on the nature and composition of the particles. For example, it is particularly preferred to use about 0.09 % by weight of TTAB per total weight of the particles. It is likewise particularly preferred to use about 1.15 % by weight of Cremodan™ by total weight of the particles, about 0.09 % by weight of CTAB per total weight of the particles, and about 0.09 % of nonylamine per total weight of the particles or 0.04 % of nonylamine per total weight of the suspension, respectively.

One or more additives can be added to the suspension, the additives being selected from:
- stabilizing agent,
- plasticizer,
- superplasticizer,
- retarder,
- accelerator,
- binding agent,
- wetting agent,
- gas generating agent,
- hardening agent, and
- rheology modifier.

Moreover, if two suspensions are prepared as indicated above, then one or more of said additives can be added to the first suspension and/or to the second suspension prior to foaming said second suspension and/or to the second suspension after said second suspension has been foamed. These additives are additives which are commonly used in the manufacturing of building materials and which are therefore known to the person skilled in the art.

For example, conceivable stabilizing agents for limiting cracks in the final porous article produced by the foams such as cement are cellulose-compounds such as cellulose microfibers, methyl cellulose, hydroxypropyl cellulose, or microcrystalline cellulose such as e.g. Vivapur™, a mixture of microcrystalline cellulose and sodium carboxymethylcellulose. Moreover, these agents also serve the purpose of increasing the foam stability. It is preferred to use one or more of the stabilizing agents in amounts of about up to 10 % by weight per total weight of the particles, preferably about up to 4 % by weight per total weight of the particles, more preferably about up to 2 % by weight per total weight of the particles, particularly preferably about 0.1 % by weight per total weight of the particles.

In order to reduce the viscosity of the suspension, plasticizers and/or superplasticizers such as lignosulfonates, naphthalene, melamine or polycarboxylate compounds, for example sulfonate-based naphthalene or sulfonate-based melamine or polycarboxylate ether, can be used.

The setting time can be adjusted by the use of retarders such as lignosulphonates, hydroxycarboxylic acid and their salts, phosphonates, saccharides, phosphates, borates and salts of lead, zinc, arsenic or antimony, for example and/or by the use of accelerators such as calcium chloride, potassium chloride, sodium silicate, alkali hydroxides or calcium-aluminate, for example.

A prevention of shrinkage or cracking is achieved by the use of binding agents such as polymers, in particular polyvinyl acetate (PVAc), polyvinyl alcohol (PVA), polyethylene glycol (PEG), or starch.

Wetting agents such as alcohols, oils or glycols can be used for modifying a contact angle and serve the purpose of facilitating the adsorption of particles at the gas-liquid interface.

In case an in-situ foaming is desired, gas generating agents such as aluminium powder or hydrogen peroxide can be added.

Conceivable hardening agents are cement, in particular Portland cement, or alkaline solutions such as e.g. a mixture of alkali hydroxides (e.g. NaOH, KOH) with sodium silicate or potassium silicate (e.g. Na₂SiO₃, K₂SiO₃, Na₂O•SiO₂, K₂O•SiO₂). To this end it is preferred to use hardening agents in amounts of up to 50% by volume, preferably of up to 40 % by volume, particularly preferably of up to 30 % by volume. With regard to the alkaline solutions, in particular sodium silicate, it is noted that said compound yields a geopolymerization with the surface-modified particles by means of a polycondensation reaction, wherein this particular reaction process results in very low CO₂ emissions. The use of cement has the advantage that hardening can be performed under ambient temperature, but CO₂ is thereby generated in this process.

Moreover, a rheology modifier such as fumed silica, cellulose, clay, or combinations thereof can be used. This is in particular useful if the foam is subsequently subjected to extrusion or 3D-printing, see below. In this context the rheology modifier serves the purpose of improving the printability of the foam, wherein said printability-improving agent can be added to the optionally foamed suspension. It was observed that the addition of a small amount of clay to a mixture of fly ash significantly improved the printability of the foam. Conceivable amounts of printability-improving agents are up to about 30 % by weight per total weight of the particles, preferably up to about 10 % by weight per total weight of the particles. For example, a preferred amount of fumed silica lies in the range of about 1 to 5 % by weight per total weight of the particles, a preferred amount of cellulose lies in the range of about 0.1 to 3 % by weight per total weight of the particles, and preferred amounts of clay can be up to 30 % by weight per total weight of the particles if it is an ash-based foam, for example.

As already mentioned above, the surface modification of the particles, i.e. the hydrophobization of the particles, is achieved by the physical and/or chemical adsorption of the amphiphilic surfactants on the surface of the particles. The pH value of the suspension depends on the type and amount of particles used. Moreover, dependent on the charge of the surface to be coated by the surfactants as well as dependent on the charge of the surfactants either lower or higher pH conditions are preferred. It might therefore be desirable to adjust the pH value of the suspension so as to create an optimal chemical environment for surface modification, foaming or further processing of the foams, respectively.

The pH value of the suspension can be adjusted to about 3 to 14, preferably to about 8 to 11, prior to foaming the suspension or after foaming the suspension. Depending on the composition of the particles, a particular pH value will yield a better adsorption of the surfactant at the interface of the particles. For example, alumina (Al₂O₃) particles have a positive charge at a pH-value of 3-7. Under these conditions it is therefore preferred to use negatively-charged surfactants since the adsorption of a negatively-charged surfactant on positively-charged particles is enhanced. Likewise, an improved interaction is obtained between e.g. silica particles and a positively-charged surfactant. Or in other words, a good electrostatic adsorption of the surfactants to the particle surface is achieved if the surfactants and the particles have opposite charges. A preferred pH value is then a pH value at the pKa value, i.e. the logarithmic acid dissociation constant of the surfactant. The pH value can be adjusted by means of adding a basic or acidic compound or solution to the suspension. In doing so hydrochloric acid (HCl) and sodium hydroxide (NaOH) are commonly used for adjusting the pH value.

It is preferred that the particles are charged particles. It should be noted that the particles can comprise a net negative charge or a net positive charge on their surface as a result of the reaction between surface hydroxyl groups and protons or hydroxyl anions (OH⁻) that are present in the aqueous phase even if the overall charge of the percolating network is neutral.

The particles can be inorganic particles, preferably selected from aluminosilicates, in particular aluminosilicate-based inorganic particles obtained from mineral processing tailings, catalyst residues, coal bottom ash, rice husk ash, palm oil ash, waste glass, paper sludge ash, sludge from water treatments or ceramic waste material.

In particular, it is preferred that the particles comprise fly ash particles and/or earth particles. Other conceivable examples of aluminosilicates are kaolin and feldspar.

Fly ash is a heterogeneous material with silicon dioxide (SiO₂), aluminium oxide (Al₂O₃), iron oxide (Fe₂O₃) and occasionally calcium oxide (CaO) being the main chemical components. Earth particles, also referred to as clay particles, likewise corresponds to a heterogeneous material and combines one or more clay minerals with possible traces of quartz (SiO₂) and metal oxides such as aluminium oxide (Al₂O₃) and magnesium oxide (MgO). Clay minerals are compounds which mainly comprise silicon dioxide (SiO₂), aluminium oxide (Al₂O₃), iron oxide (Fe₂O₃) and alkali oxides such as potassium oxide (K₂O) and sodium oxide (Na₂O).

That is, it is particularly preferred that the particles representing the basis of the foams are aluminosilicates, preferably fly ash or earth, i.e. clay particles. Moreover, it is preferred to use either of these particles or a combination of these particles. However, it is also conceivable to use other inorganic waste materials such as the compounds mentioned above. These waste materials can also be referred to as secondary raw materials. The particles are preferably untreated particles, for example fly ash particles taken from the waste of coal combustion. The particles can be used directly for fabricating the foams, wherein no purification process is required.

Moreover, the said particles can also be obtained by recycling final consolidated porous articles that have already been prepared previously, e.g. by the method according to the invention, wherein said final porous articles are crushed down so as to generate particles, which particles are then re-used for a new preparation of foams according to the invention. In doing so, the binder phases, i.e. cement, geopolymers and the like, will be hydrated during consolidation and will be used as inert particles. Since a fraction of the surfactants is volatized during the drying process, more surfactant might be required to prepared stable foams from this recycled material.

In addition, regarding the toxicity of these particles, it should be noted that fly ash is widely used as an additive for concrete in the construction industry, wherein traces of heavy metals can be present depending on the origin of the ash. However, by using hardening agents such as cement or sodium silicate mentioned above a reaction between these hardening agents and the fly ash particles takes place, wherein calcium silicate hydrates or geopolymers are produced. As a result, any traces of the heavy metals are entrapped in these newly formed matrices, whereby a release of heavy metals in the environment can be minimized or even prevented.

The particle size corresponds to the mean particle size measured for the largest dimension and depends on the origin of the particles. In the case of fly ash, for example, the fly ash particles are generally spherical in shape and range in size from about 0.5 µm to about 300 µm. In general, however, it is preferred that the particles have a size between about 1 nm to about 100 µm, preferably between about 200 nm to about 50 µm. If desired, the particle size can be adjusted by sieving or ball milling techniques as commonly known in the present field of technology.

According to the invention, a foamable suspension comprises:
- an aqueous liquid, preferably water,
- particles having the at least partially hydrophobized surface as obtained in the method described above, and
- optionally one or more additives selected from stabilizing agents, plasticizers, superplasticizers, retarders, accelerators, binding agents, wetting agents, gas generating agents, hardening agents and rheology modifiers.

The aqueous liquid preferably corresponds to the aqueous liquid used to prepare the suspension comprising the particles having the at least partially hydrophobized surface as described above. Moreover, it is conceivable that one or more of the additives as described above are added to said suspension or foamable suspension, respectively, prior to the foaming. However, it is also possible to add one or more of said additives to the aqueous liquid before the particles and the surfactants are added to the aqueous liquid.

According to the invention, such a foamable suspension can be used for preparing a foam, wherein the foamable suspension is mechanically foamed, preferably by means of a mixer, and/or wherein the foamable suspension is in-situ foamed by adding a gas generating agent to the foamable suspension.

That is, an incorporation of gas into the foamable suspension containing the particles having the at least partially hydrophobized surface as obtained in the method described above can be achieved in any convenient way such as by direct foaming, e.g. mechanical mixing, or by using gas generating agents, i.e. in-situ, wherein a gas such as oxygen (O₂) is generated in a chemical reaction. For convenience and economy, it is preferred that the gas is air. Other gases such as nitrogen, oxygen, argon or carbon dioxide are however conceivable, too. To this end it is possible to subject the foamable suspension to a highspeed agitation while the foamable suspension is exposed to the atmosphere. The agitation can be carried out by a mixer and for a sufficient period of time, during which time bubbles of air are introduced into the foamable suspension until a desired expansion has been reached. Other ways of introducing the gas into the foamable suspension are for example by means of bubbling the gas through a filter into the foamable suspension or by means of injecting pressurized gas through a nozzle into the foamable suspension. Through the choice of the pore size of the filter or the diameter of the ejection nozzle it is possible to adjust the pore size of the foams and hence of the final porous article prepared from the foams. In another technique, a reactive gas-generating substance such as hydrogen peroxide (H₂O₂) or manganese oxide (MnO) can be added to the foamable suspension, wherein the generated gas foams the foamable suspension. It should be understood that the more gas is incorporated into the foamable suspension or generated in the foamable suspension the more porous the thus generated foam is, wherein the porosity levels reached are also dependent on the particle size, the particle type and the particle concentration, respectively. It should furthermore be noted that the foams can be generated within a few minutes only, wherein there is no need for any special treatment beyond the surface modification, i.e. the hydrophobization, of the particles with the long-chain surfactants.

According to the invention a foam comprises a foamed suspension, the foamed suspension comprising:
- an aqueous liquid, preferably water,
- particles having the at least partially hydrophobized surface as obtained in the method described above, and
- optionally one or more additives selected from stabilizing agents, plasticizers, superplasticizers, retarders, accelerators, binding agents, wetting agents, gas generating agents, hardening agents and rheology modifiers.

The aqueous liquid comprising the at least partially hydrophobized particles preferably corresponds to the suspension or foamable suspension comprising the particles having the at least partially hydrophobized surface as described above. Moreover, it is conceivable that one or more of the additives as described above are added to said suspension or foamable suspension, respectively, prior to the foaming and/or after the foaming. However, it is also possible to add one or more of said additives to the aqueous liquid before the particles and the surfactants are added to the aqueous liquid. The foaming of the suspension or foamable suspension can be performed by means of mechanically foaming and/or by means of in-situ foaming as described above.

The particles having the at least partially hydrophobized surface preferably represent at least about 50 % of the total solids part of the foam, particularly preferably about 80 % of the total solids part of the foam, and/or the foam density preferably is in the range of about 20 kg/m³ to about 1000 kg/m³, particularly preferably in the range of about 50 kg/m³ to about 800 kg/m³, and/or the foam preferably has a porosity of about 20 % by volume to about 99 % by volume, particularly preferably of about 50 % by volume to about 95 % by volume, and/or the foam preferably has a conductivity in the range of about 0.01 W/(mK) to about 0.3 W/(mK), particularly preferably in the range of about 0.02 W/(mK) to about 0.2 W/(mK), and/or the foam preferably comprises bubbles of gas having a size in the range of about 1 µm to about 500 µm, particularly preferably of about 10 µm to about 100 µm.

It was found that the foams of the invention remain stable for weeks with a porosity level of for example 85% by volume, resulting in foam densities in the range of between 150 kg/m³ to 600 kg/m³. This porosity level can be further increased to 90 % by volume or even higher if the particles are ball milled before their surface is modified by means of the surfactants. Because of their high stability, the foams can be combined with rheology modifiers such as fumed silica to obtain pastes that can be further processed under high shearing conditions. As a result, they can be extruded or 3D printed in any shape and stored for multiple days. The mechanical properties of the dried foams can be adjusted by adding hardeners in the initial composition or to a pre-foamed suspension. In construction engineering the compression strength of the article to be used is a key property. Generally, a compression strength of at least about 50 kPa is required, wherein the foams according to the present invention achieve one order of magnitude higher with at least about 500 kPa or even up to 1 MPa. Hardeners such as sodium silicate or Portland cement at concentrations lower than 20% enable the production of foams with a compressive strength in the range of 1 MPa, which therefore surpasses the requirements from industry.

According to the invention a method of preparing a porous article comprises the steps of:
- providing a foam as described above,
- casting or extruding or additive manufacturing, in particular 3D-printing, said foam, and
- optionally setting, and/or
- optionally drying, and/or
- optionally sintering.

The subsequent processing of the foams will mainly depend on the nature of the intended porous article.

In principle, it is conceivable to submit the foams to hardening, sintering or processing such as 3D-printing, extrusion or injection moulding. Hence, according to the invention the foams as described above can be used to produce porous articles, wherein the foam is subjected to casting or extrusion or additive manufacturing and optionally setting and/or optionally drying and/or optionally sintering.

There are different hardening options conceivable, for example hardening by means of air drying the foams only. However, it is likewise conceivable to add one or more of the above-mentioned hardening agents such as cement or alkaline solutions, for example sodium silicate. Another hardening option is sintering the foams, for example at a temperature in the range of about 800 °C to 1800°C, preferably 900°C, during a period of time of about one hour to three hours, preferably for about two hours.

If the foams are subjected to printing, it is conceivable but however not necessary to add a rheology modifier or a printability-improving agent, respectively, such as fumed silica to the suspension prior to foaming. Subsequently, the suspension can be foamed, loaded in a cartridge or the like and then be discharged out of an orifice or nozzle provided on the cartridge. The printing speed depends on the size of the orifice or nozzle. Preferably, an orifice size or nozzle size is in the range of about 0.2 mm to about 400 mm, particularly preferably in the range of about 0.4 mm to about 200 mm. Depending on the nozzle diameter different printing speeds can be obtained. In the case of a smaller nozzle diameter of about 0.4 mm, for example, printing speeds of about 1 mm/s to 15 mm/s, preferably of about 4 mm/s can be reached. In the case of a larger nozzle diameter of about 200 mm, for example, printing speeds of about 1 cm/s to 20 cm/s, preferably of about 5 cm/s can be reached.

Hence, the porous articles comprising the surface-modified, i.e. hydrophobized, particles according to the invention are characterized by several ecological and economic advantages in the field of building materials, such as a high insulation capability due to the remarkably low thermal conductivity, very high compressive strength, and a flame resistance due to the inorganic nature of the particles. In fact, they easily support temperatures as high as 1000°C. Moreover, the porous articles are water resistant and not sensitive to moisture. All of these functionalities are achieved using raw materials of extremely low cost, since a majority of the foam can be made of waste or widely available natural materials as feedstock. The new foams thus have a strong potential as thermal or acoustic insulation materials due to their low cost, good mechanical properties and outstanding insulation performance. Moreover, their environmental footprint fulfils the recent and upcoming governmental initiatives, being non-toxic, flame resistant, free from fossil fuels, and producing very low CO₂ emissions during both their production and operation. Besides these attractive economical and technical aspects, the properties of these foams are customizable. Depending on the locally available resources, fly ash or earth particles from different compositions can be used, for example. The density, pore size, porosity and modifiers of the foams and thus the mechanical properties as well as the thermal conductivity can be adjusted, leading to a large product palette with one single technology.

### BRIEF DESCRIPTION OF THE DRAWINGS

Preferred embodiments of the invention are described in the following with reference to the drawings, which are for the purpose of illustrating the present preferred embodiments of the invention and not for the purpose of limiting the same. In the drawings,
- Fig. 1: shows a schematic representation of a method of preparing foams and porous articles according to a first embodiment;
- Fig. 2: shows a schematic representation of a method of preparing foams and porous articles according to a second embodiment;
- Fig. 3: shows an SEM image of a foam comprising fly ash particles;
- Fig. 4: shows an SEM image of a foam comprising earth particles;
- Fig. 5: shows a further SEM image of a foam comprising fly ash particles;
- Fig. 6: shows a further SEM image of a foam comprising earth particles;
- Fig. 7: shows an image of a foam comprising earth particles;
- Fig. 8: shows an image of a foam comprising fly ash particles;
- Fig. 9a: shows a schematic representation of a gas-liquid interface in a foam according to the invention;
- Fig. 9b: shows an enlarged view of the gas-liquid interface according to Figure 9a, wherein the established percolating network is evident.

### DESCRIPTION OF PREFERRED EMBODIMENTS

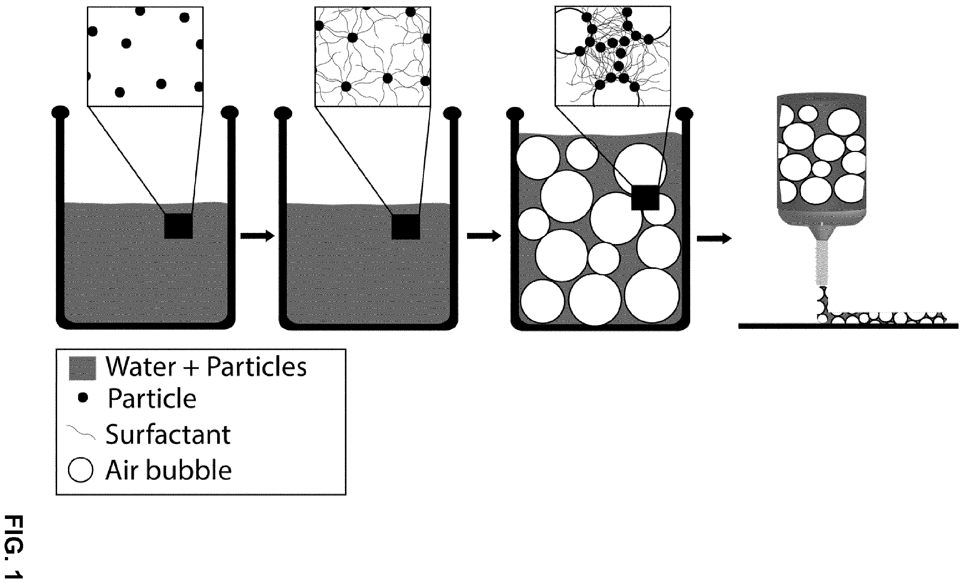

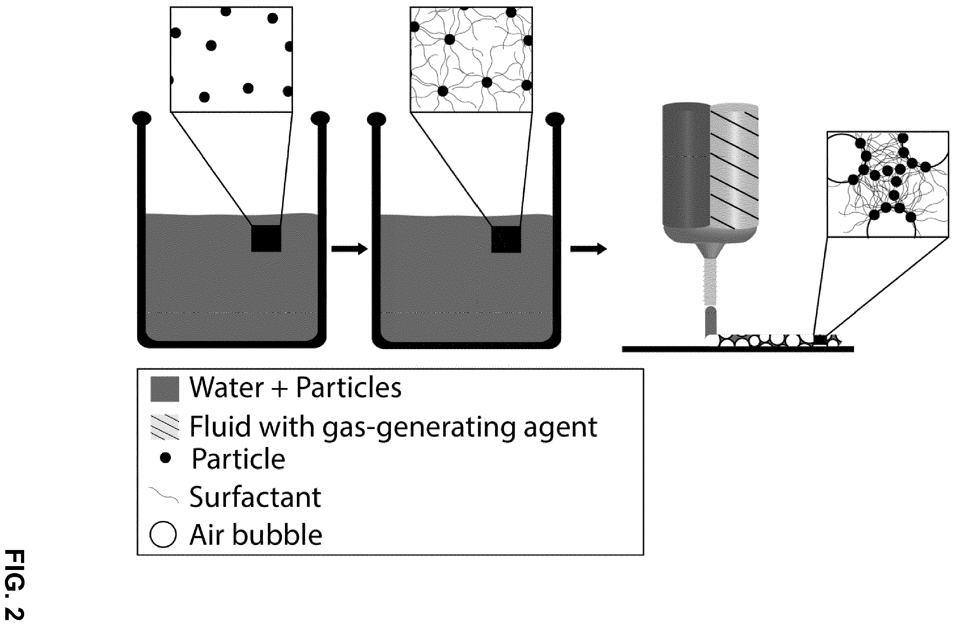

In figures 1 and 2 different methods for preparing foams and porous articles are depicted. In fact, in figure 1 a particle-stabilized foam is prepared by producing, in a first step, a first suspension comprising an aqueous liquid and particles. For example, earth particles in an amount of about 40 % by weight per total weight of the suspension or fly ash particles in an amount of about 50 % by weight per total weight of the suspension can be added to water. In a second step, a surfactant having a backbone chain comprising at least nine carbon atoms is added to the suspension in order to at least partially hydrophobize the surface of the particles. For instance, Cremodan™ in an amount of about 0.72 % by weight per total weight of the suspension can be added. Besides, additives to adjust or improve mechanical properties can be added to this suspension, too. For example, a stabilizing agent such as a cellulose compound against cracking, a network-stabilizing agent such as a protein or polysaccharide in order to improve the mechanical properties and a rheology modifier such as fumed silica can be added. In one embodiment hydroxypropyl cellulose in an amount of about 0.5 % by weight per total weight of the particles, Xanthan in an amount of about 0.2 % by weight per total weight of the particles and fumed silica in an amount of about 2 % by weight per total weight of the particles are added. In a third step, this suspension is agitated with a mixer in order to get air into the suspension. Thereby, a particle-stabilized foam is formed. In case of this particular composition of the suspension, a particle-stabilized foam with a porosity of up to 95 % is generated. In a fourth step, the particle-stabilized foam can be processed so as to create a desired porous article. For example, the particle-stabilized foam can be hardened by means of air drying only. To get a rapid hardening, it is conceivable to add a hardening agent to the particle-stabilized foam. For example, a dispenser comprising the particle-stabilized foam stored in a first cartridge and a hardening agent such as cement, for example in an amount of about 2 % to 20 % by weight per total weight of the suspension, stored in a second cartridge can be used, wherein the two components are then extruded through a dual static mixer. In this case, the cement starts reacting with water which initiates a rapid setting. However, it is likewise conceivable to sinter the particle stabilized-foams or to cast the particle-stabilized foams. In the former case, the particle-stabilized foams can be sintered at temperatures in the range of about 800 °C to 1400°C during a period of time of about one hour to three hours, wherein the heating rate is between about 0.5 °C/min to about 5 °C/min, and whereas the cooling rate is set to about 10 °C/min to 2 °C/min. In the latter case, an additive such as sodium silicate, for example in an amount of about 10 % or 20 % by weight per total weight of the suspension, can be added to the particle-stabilized foam prior to casting the foam.

In figure 2 a particle-stabilized foam is prepared by in-situ foaming, wherein a gas-generating agent is used. According to this method, a first solution comprising an aqueous liquid such as water and surface-modified particles is mixed with a second solution comprising a gas-generating agent such as hydrogen peroxide. In the present example, the first solution additionally comprises a catalyst such as manganese oxide (MnO) and sodium hydroxide (NaOH) and the second solution additionally comprises a hardening agent such as sodium silicate or cement. Here, these two solutions are initially separately stored in two cartridges of a dispenser and then discharged through a dual static mixer, whereby a foam expansion is generated.

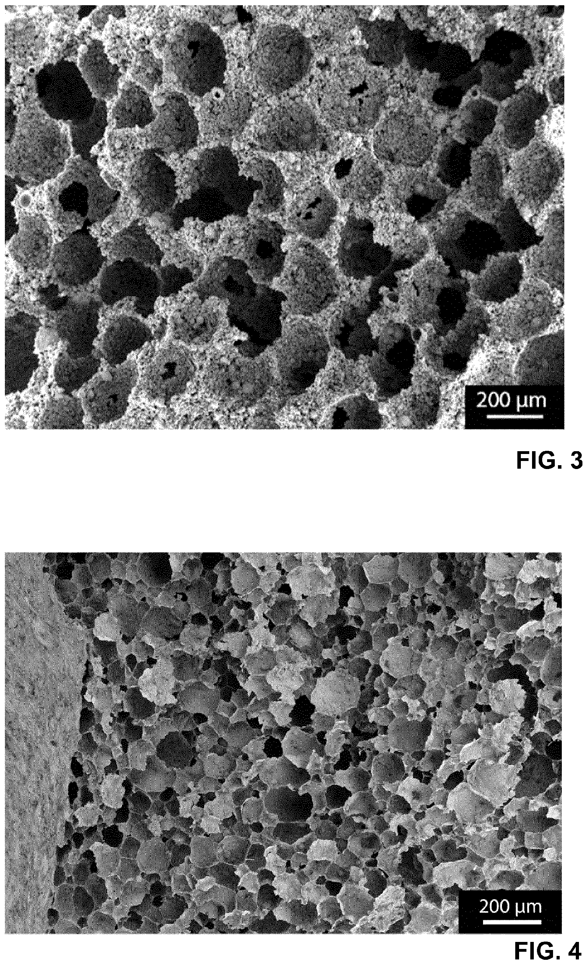

In figures 3 and 4, particle-stabilized foams prepared with fly ash particles and earth particles are depicted, respectively. In particular, figure 3 depicts a foam comprising fly ash particles, wherein 58 % per weight of fly ash per total weight of the suspension, 0.72 % per weight of Cremodan™ per total weight of the suspension and 41.28 % by weight of water per total weight of the suspension were initially used for preparing the foamable suspension. After foaming said suspension, the foamed suspension was subjected to sintering at 900 °C, whereby the foam according to figure 3 was obtained.

Figure 4 depicts a foam comprising earth particles, wherein 45 % by weight of earth particles per total weight of the suspension, 0.04 % by weight of TTAB per total weight of the suspension and 54.96 % by weight of water per total weight of the suspension were initially used for preparing the foamable suspension. The suspension was then foamed by mechanically foaming for 5 minutes. The image depicted in figure 4 was taken after 3 days and after drying the foamed suspension at ambient temperature.

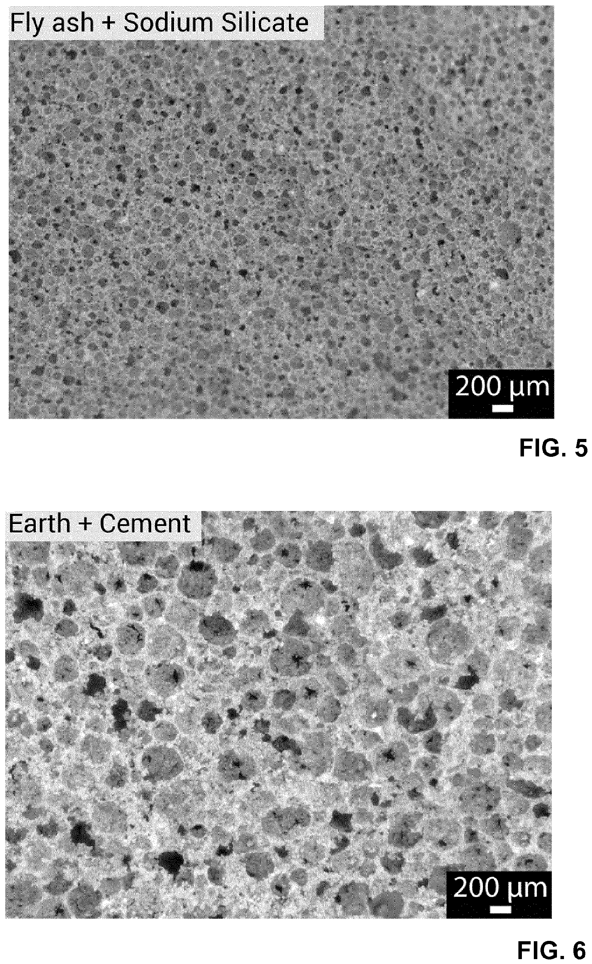

Figure 5 depicts a foam comprising fly ash particles, wherein 58 % by weight of fly ash particles per total weight of the suspension, 0.05 % by weight of TTAB per total weight of the suspension, 34.75 % by weight of water per total weight of the suspension, and 7.2 % by weight of sodium silicate (Na₂O•SiO₂) per total weight of the suspension were initially used for preparing the foamable suspension. The suspension was then mechanically foamed and subsequently dried. Said drying process comprised the steps of i) drying at a temperature of 40 °C and at 100 % humidity for 24 hours, ii) drying at a temperature of 40 °C and at 65 % humidity for 6 days, and iii) drying at 25 °C for 20 days.

Figure 6 depicts a foam comprising earth particles, wherein 45 % by weight of earth particles per total weight of the suspension, 0.59 % by weight of Cremodan™ per total weight of the suspension, 10 % by weight of Portland Cement per total weight of the suspension, and 44.41 % by weight of water per total weight of the suspension. The suspension was then mechanically foamed and subsequently dried.

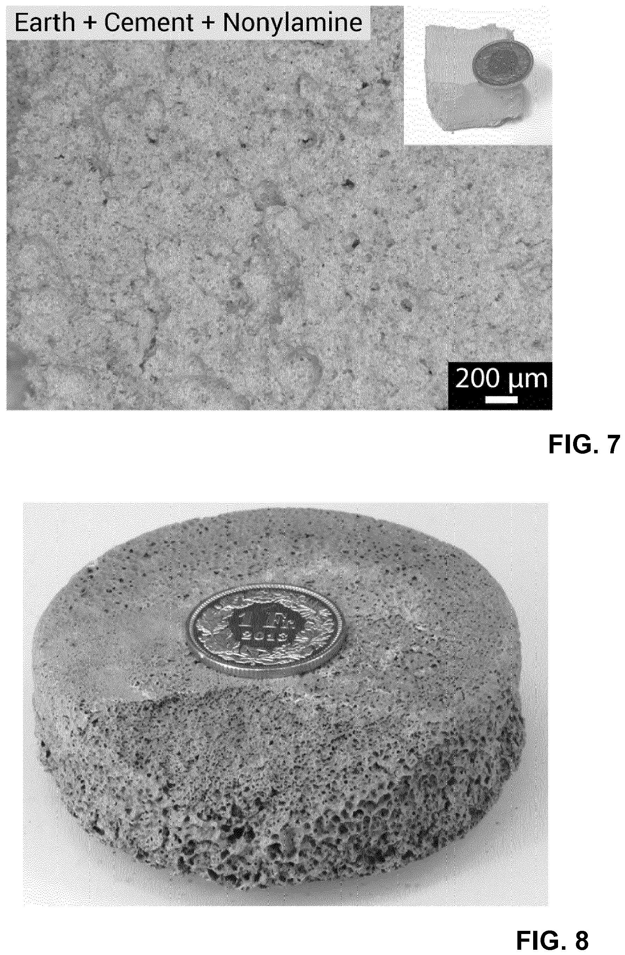

Figure 7 depicts a foam comprising earth particles, wherein 45 % by weight of earth particles per total weight of the suspension, 0.04 % by weight of nonylamine per total weight of the suspension, 10 % by weight of Cement per total weight of the suspension, and 44.96 % by weight of water per total weight of the suspension are mechanically foamed. Subsequently, the foam was dried in an oven at a temperature of 60 °C. The foam of this example comprises pores of a small size, which is a result of a higher mixing speed applied in the foaming process, namely 800 revolutions per minute (rpm). The small pore size is further illustrated by the two Swiss Franc piece placed on top of the foam.

Figure 8 depicts a foam comprising fly ash particles, which was generated from two solutions. Namely a first solution comprising 68 % by weight of fly ash particles per total weight of the first solution, 0.4 % by weight of Cremodan™ per total weight of the first solution, 0.1 % by weight of manganese oxide per total weight of the first solution, and 31.5 % by weight water per total weight of the first solution, as well as a second solution comprising 29.6 % by weight of sodium silicate (Na₂O•SiO₂) per total weight of the second solution, 14.9 % by weight of hydrogen peroxide (H₂O₂) per total weight of the second solution, and 55.5 % by weight of water per total weight of the second solution. After mixing the two solutions with each other a foam was generated by in-situ gas generation and solidified by the sodium silicate. The thus created foam was then dried in a drying process comprising the steps of i) drying at a temperature of 40 °C and at 100 % humidity for 24 hours, ii) drying at a temperature of 40 °C and at a humidity of 65 % for 6 days, and iii) drying at a temperature of 25 °C for 20 days. The thereby dried foam comprises pores having a size of up to 1 to 2 millimeters. The large pore size is further illustrated by the one Swiss Franc piece placed on top of the foam.

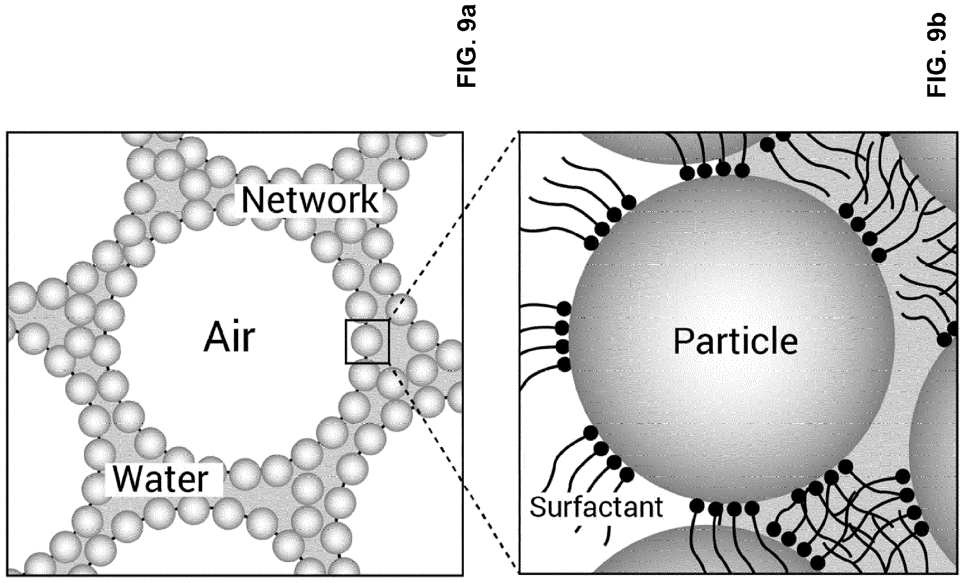

It directly follows from these examples that significantly less amounts of long-chain surfactants are needed in order to achieve the same stability of a foam generated with a short-chain surfactant. In fact, more than one order of magnitude less long-chain surfactant is needed, see e.g. the foam prepared by 0.04 % by weight of nonylamine (9 carbon atoms in the backbone chain) per total weight of the suspension according to figure 9 as compared to an equally-stable foam prepared by about 2 % by weight of propyl gallate (3 carbon atoms in the backbone chain) per total weight of the suspension.

Figures 9a and 9b depict schematic illustrations of the particle stabilization of the gas bubbles established in foams according to the invention. As follows from these figures, the surface-modified particles are adsorbed on the surface of the gas bubbles generated upon the foaming of the foamable suspension by means of the surfactants. In addition, the particles partially hydrophobized by the long backbone-chain of the surfactants form a percolating network around the gas bubbles and throughout the continuous liquid medium, which additionally increase stability of the foam.

With respect to Figures 1, 2, 9a and 9b it should be noted that the compounds are not drawn to scale. In fact, the size of the particles is typically much larger than the size of the surfactants.

### Example I: Mechanical foaming and addition of cement

- Step 1:: Optional milling of aluminosilicate particles obtained from secondary raw materials.
- Step 2:: Dissolution of a long-chain surfactant in water.
- Step 3:: Addition of the optionally milled aluminosilicate particles to the dissolved long-chain surfactant, wherein the particles are distributed by means of mixing at 200 revolutions per minute.
- Step 4:: Adjusting the pH-value of the suspension of Step 3 to a pH-value of 9-10.
- Step 5:: Foaming the suspension obtained in Step 4 by using a high shear mixer at 800 to 1000 revolutions per minute.
- Step 6:: Dispersion of cement in water for a pre-activation, wherein the water/cement ratio is 0.3 - 2.
- Step 7:: Mixing of the foamed suspension of Step 4 with the dispersion of cement in water of Step 5 with a high shear mixer at 800 to 1000 revolutions per minute.
- Step 8:: Casting or extruding or 3D-printing the mixed foamed suspension of Step 7.
- Step 9:: Setting the casted or extruded or 3D-printed foamed suspension of Step 8 by covering or placing it in a humidity chamber at 70-100% of humidity at a temperature of 25°C for 4-7 days.
- Step 10:: Drying the porous article of Step 9.

### Example II: Mechanical foaming and addition of alkaline solution

- Step 1:: Optional milling of aluminosilicate particles obtained from secondary raw materials.
- Step 2:: Dissolution of a long-chain surfactant in water.
- Step 3:: Addition of the optionally milled aluminosilicate particles to the dissolved long-chain surfactant, wherein the particles are distributed by means of mixing at 200 revolutions per minute.
- Step 4:: Adjusting the pH-value of the suspension of Step 3 to a pH-value of 9-10.
- Step 5:: Foaming the suspension obtained in Step 4 by using a high shear mixer at 800 to 1000 revolutions per minute.
- Step 6:: Addition of a sodium silicate solution (Na₂O•SiO₂) to the foamed suspension obtained in Step 5 either by mixing using a high shear mixer or by mixing using a dual static mixer with a single extruder, wherein the foamed suspension of Step 5 is comprised in one cartridge and the sodium silicate solution is comprised in another cartridge.
- Step 7:: Casting or extruding or 3D-printing the mixed suspension of Step 6.
- Step 8:: Setting the casted or extruded or 3D-printed mixed suspension of Step 7 by covering it at 40-80°C, preferably 60°C for 24h.
- Step 9:: Drying the porous article of Step 8.

### Example III: In-situ foaming and alkaline solution

- Step 1:: Optional milling of aluminosilicate particles obtained from secondary raw materials.
- Step 2:: Dissolution of a long-chain surfactant in water.
- Step 3:: Addition of the optionally milled aluminosilicate particles to the dissolved long-chain surfactant.
- Step 4:: Adjusting the pH-value of the suspension of Step 3 to a pH-value of 9-10 and addition of a catalyst, e.g. manganese oxide (MnO).
- Step 5:: Preparation of an alkaline solution with water and hydrogen peroxide (H₂O₂).
- Step 6:: Mixing of the suspension of Step 4 and the solution of Step 5 using a dual static mixer with a single screw extruder.
- Step 7:: Casting or extruding or 3D-printing the mixed suspension of Step 6.
- Step 8:: Setting the casted or extruded or 3D-printed mixed suspension of Step 7 by covering it at a temperature of 40-80°C, preferably 60°C for 24h.
- Step 9:: Drying the porous article of Step 8.

### Example IV: Mechanical foaming and sintering

- Step 1:: Optional milling of aluminosilicate particles obtained from secondary raw materials.
- Step 2:: Dissolution of a long-chain surfactant in water.
- Step 3:: Addition of the optionally milled aluminosilicate particles to the dissolved long-chain surfactant, wherein the particles are distributed by means of mixing at 200 revolutions per minute.
- Step 4:: Adjusting the pH-value of the suspension of Step 3 to a pH-value of 9 to 10.
- Step 5:: Foaming the suspension obtained in Step 4 by using a high shear mixer at 800 to 1000 revolutions per minute.
- Step 6:: Casting or extruding or 3D-printing the foamed suspension of Step 5.
- Step 7:: Drying the porous article of Step 6.
- Step 8:: Sintering the dried porous article of Step 7 at temperatures between about 600 °C to 1200°C depending on the particle composition for about 2 h.

## Claims

1. A method of preparing foams comprising the steps of:
- providing a suspension comprising an aqueous liquid, preferably water, particles, and at least one surfactant, wherein the at least one surfactant at least partially hydrophobizes a surface of the particles; and
- foaming the suspension comprising the particles having the at least partially hydrophobized surface,
**characterized in that** the at least one surfactant is selected from surfactants having a backbone chain comprising at least nine carbon atoms, the at least one surfactant preferably being an amphiphilic molecule consisting of a tail coupled to a head group, wherein the tail comprises the backbone chain comprising at least nine carbon atoms.

2. The method according to claim 1, wherein the at least one surfactant is selected from the group consisting of polyelectrolytes, proteins, polysaccharides, glycerols, glycerides, fatty acids, ammonium compounds, alkyl compounds, or combinations thereof.

3. The method according to claim 2, wherein the polyelectrolytes and/or the proteins and/or the polysaccharides and/or the glycerols and/or the glycerides and/or the fatty acids and/or the ammonium compounds and/or the alkyl compounds have at least one group selected from bromides, amines, phosphates, phosphonates, sulfates, amides, carboxylic acids, pyrrolidines, betaines or gallates or corresponding salts.

4. The method according to any one of the preceding claims, wherein the at least one surfactant is a glycerol monostearate-based compound, cetrimonium bromide, tetradecyltrimethylammonium bromide, nonylamine, or combinations thereof.

5. The method according to any one of the preceding claims, wherein the at least one surfactant is present in amounts of about 0.001 % by weight up to about 5 % by weight per total weight of the particles, preferably of about 0.01 % by weight up to about 2 % by weight per total weight of the particles.

6. The method according to any one of the preceding claims, wherein one or more additives are added to the suspension, the additives being selected from:
- stabilizing agent,
- plasticizer,
- superplasticizer,
- retarder,
- accelerator,
- binding agent,
- wetting agent,
- gas generating agent,
- hardening agent, and
- rheology modifier.

7. The method according to any one of the preceding claims, wherein the pH-value of the suspension is adjusted to about 3 to 14, preferably to about 8 to 11, prior to foaming the suspension or after foaming the suspension.

8. The method according to any one of the preceding claims, wherein the particles are inorganic particles, preferably selected from aluminosilicates, in particular aluminosilicate-based inorganic particles obtained from mineral processing tailings, catalyst residues, coal bottom ash, rice husk ash, palm oil ash, waste glass, paper sludge ash, sludge from water treatments or ceramic waste material.

9. The method according to any one of the preceding claims, wherein the particles comprise fly ash particles and/or earth particles.

10. A foamable suspension comprising:
- an aqueous liquid, preferably water,
- particles having the at least partially hydrophobized surface as obtained in any one of the preceding claims, and
- optionally one or more additives selected from stabilizing agents, plasticizers, superplasticizers, retarders, accelerators, binding agents, wetting agents, gas generating agents, hardening agents and rheology modifiers.

11. Use of the foamable suspension according to claim 10 for preparing a foam, wherein the foamable suspension is mechanically foamed, preferably by means of a mixer, and/or
wherein the foamable suspension is in-situ foamed by adding a gas generating agent to the foamable suspension.

12. A foam comprising a foamed suspension, the foamed suspension comprising:
- an aqueous liquid, preferably water,
- particles having the at least partially hydrophobized surface as obtained in any one of the preceding claims 1 to 9, and
- optionally one or more additives selected from stabilizing agents, plasticizers, superplasticizers, retarders, accelerators, binding agents, wetting agents, gas generating agents, hardening agents and rheology modifiers.

13. The foam according to claim 12, wherein the particles having the at least partially hydrophobized surface represent at least about 50 % of the total solids part of the foam, preferably about 80 % of the total solids part of the foam, and/or
wherein the foam density is in the range of about 20 kg/m³ to about 1000 kg/m³, preferably in the range of about 50 kg/m³ to about 800 kg/m³, and/or
wherein the foam has a porosity of about 20 % by volume to about 99 % by volume, preferably of about 50 % by volume to about 95 % by volume, and/or
wherein the foam has a conductivity in the range of about 0.01 W/(mK) to about 0.3 W/(mK), preferably in the range of about 0.02 W/(mK) to about 0.2 W/(mK), and/or
wherein the foam comprises bubbles of gas having a size in the range of about 1 µm to about 500 µm, preferably of about 10 µm to about 100 µm.

14. A method of preparing a porous article comprising the steps of:
- providing a foam according to claim 12 or 13,
- casting or extruding or additive manufacturing, in particular 3D-printing, said foam, and
- optionally setting, and/or
- optionally drying, and/or
- optionally sintering.

15. Use of the foam according to claim 12 or 13 to produce porous articles, wherein the foam is subjected to casting or extrusion or additive manufacturing and optionally setting and/or optionally drying and/or optionally sintering.
